# EUROPEAN PATENT APPLICATION

(11) **EP 3 331 182 A1**
(43) Date of publication of application: **06.06.2018**
(21) Application number: 16868006.4
(22) Date of filing: 24.11.2016
(51) Int. Cl.: H04L 1/00, H04L 5/00

(54) **TRANSMISSION MODE REPORTING METHOD AND USER EQUIPMENT**

(30) Priority: 24.11.2015 CN 201510824501; 21.12.2015 CN 201510965378
(71) Applicant: MediaTek Singapore Pte. Ltd., Singapore 138628 (SG)
(72) Inventor: ZHANG, Lei, Beijing 100088 (CN); SUN, Feifei, Beijing 100088 (CN); WU, Min, Beijing 100029 (CN); ZHANG, Yuanyuan, Beijing 100096 (CN)
(74) Representative: Habermann, Hruschka & Schnabel
(86) International application number: PCT/CN2016/107044
(87) International publication number: WO 2017/088783

(57) **Abstract**

Provided in the present invention are a transmission mode reporting method and user equipment. In a novel aspect, the present invention provides a method for reporting a transmission mode, comprising: in a communication network, receiving a random access resource configuration from a base station through a user equipment; selecting a random access resource according to a transmission mode capability of the user equipment; transmitting a first message by using the selected random access resource; transmitting a third message according to a random access response (RAR), wherein the third message comprises information of the transmission module supported by the user equipment. The transmission mode reporting method and user equipment provided in the present invention can reduce a peak-to-average power ratio of a signal transmission of the user equipment or provide a higher peak rate of the uplink transmission.

## Description

### CROSS REFERENCE TO RELATED APPLICATIONS

This application claims the priority of Chinese Patent Application No. 201510824501.6, filed on November 24, 2015, titled "METHOD, UE, AND BASE STATION FOR TRANSMISSION CAPABILITY INDICATION AND TRANSMISSION MODE CONFIGURATION AND COMMUNICATION SYSTEM" and the Chinese Patent Application No. 201510965378.X, filed on December 21, 2015, titled "METHOD, UE, AND BASE STATION FOR TRANSMISSION CAPABILITY INDICATION AND TRANSMISSION MODE CONFIGURATION AND COMMUNICATION SYSTEM", contents of which are incorporated herein by reference.

### FIELD OF THE INVENTION

The invention relates to wireless communication, and more particularly to methods, devices, and system for indicating transmission capability and configuring transmission modes.

### BACKGROUND

With the rapid development of the cellular mobile communication, the fifth-generation (5G) mobile communication system attracts more and more attention and becomes a popular research subject. Recently, 5G is officially named as IMT-2020 by ITU, and it is expected that 5G will come into the commercial phase in 2020. Unlike traditional 2G/3G/4G mobile cellular systems, 5G will be applied for not only human users but also a wide variety of machine type communication (MTC) users. Among many businesses providing various services in the MTC terminal, there is a business called MMC (Massive MTC). The features of the MTC terminal serviced by this service are: (1) low manufacturing cost: the manufacturing cost of the terminal is far lower than that of smart phones (2) a large number of connections: based on the requirements for 5G made by ITU, the MMC service will support 10⁶ connections per square kilometer; (3) low demand for data transmission rate; (4) high tolerance for latency, and so on.

In cellular communication for traditional user equipment (UE), the cell coverage rate is 99% when the system is designed. The uncovered 1% users may obtain services through cell selection or cell reselection based on the mobility of UE. Different from traditional UEs for human communication, some types of MMC UEs may be disposed on relatively fixed locations, such as MTC UEs serving public facilities (such as streetlights, water, electricity, gas meters, etc.). These types of MMC UEs almost have no mobility, so in the process of designing MMC communication systems, the cell coverage rate is usually required to reach 99.99% or more. Even worse, these types of MMC UEs may be disposed on the locations where the path loss is serious, such as the locations in basements. Therefore, in order to obtain better coverage, the target maximum coupling loss (MCL) utilized by MMC system designs is usually larger than that utilized by traditional cellular systems by 10dB to 20dB. For example, in an ongoing system standardization work of narrow-band Intemet-of-Things (NB-IoT), the cell MCL takes 164 dB or more as the target.

In order to increase the MCL which can be supported by systems, an NB-IoT system will support UE which is capable of utilizing single-tone transmission. In the cases where the transmission power of the equipment is limited, the single-tone transmission can withstand a greater transmission path loss by increasing the transmission power per unit of spectrum. In addition, compared with a multi-tone transmission mode, single-tone transmission mode has a smaller peak-to-average power ratio (PAPR). A smaller PAPR can achieve higher power amplifier (PA) efficiency. One shortcoming of the single-tone transmission mode may be its limited transmission bandwidth (BW). For users with better channel transmission conditions, the single-tone transmission mode cannot provide a higher peak rate. Therefore, the NB-IoT system will also support the multi-tone transmission mode. In order to minimize the PAPR of the transmission signal from the user, the multi-tone transmission mode may adopt the conventional LTE uplink transmission method, that is, single-carrier frequency division multiple access (SC-FDMA). In view of the above, the present invention provides a method and device for reporting transmission capability of UE and configuring a transmission mode.

### SUMMARY

In view of the above, the present invention provides methods and UE for reporting a transmission mode .

In a novel aspect, the present invention provides a method for reporting a transmission mode, comprising: receiving a random access resource configuration from a base station by UE in a communication network; selecting random access resource(s) according to a transmission mode capability of the UE; transmitting a first message by using the selected random access resource(s); transmitting a third message according to a random access response RAR, wherein the third message contains information of the transmission mode supported by the UE.

The present invention further provides a UE for reporting a transmission mode, comprising: a transceiver, receiving a random access resource configuration from a base station in a communication network; a random access processing module selecting random access resources according to a transmission mode capability of the UE and transmitting a first message by using the selected random access resources; and transmitting a third message by the transceiver according to a random access response RAR, wherein the third message contains information of the transmission mode supported by the UE.

The methods and UE for reporting the transmission mode provided by the invention can reduce the peak-to-average power ratio of the signals transmitted by the UE or provide a higher peak rate of the uplink transmission.

### BRIEF DESCRIPTION OF THE DRAWINGS

Embodiments of the present invention will be described by referring to drawings, in which the same numerals indicate the similar elements.
FIG. 1 is a schematic block diagram of a wireless communication system according to embodiments of the present invention.
FIG. 2 is a schematic block diagram of UE and a base station according to the described embodiments of the present invention.
FIG. 3 is a schematic diagram, wherein a base station configures a transmission mode for a UE according to an embodiment of the present invention.
FIG. 4 is a flowchart of a method for an UE to report its transmission capability to a base station according to an embodiment of the present invention.
FIGs. 5A and 5B show methods for reporting and configuring a transmission mode and capability supported by a UE according to an embodiment of the present invention.
FIG. 6 is a flow chart of that a UE reports information to the base station 602 and receives transmission mode configuration according to an embodiment of the present invention.
FIG. 7 is a flow chart of a method of configuring a transmission mode of UE by a base station according to an embodiment of the present invention.
FIG. 8 is a flow chart of a random access method according to an embodiment of the present invention.
FIG. 9 is a flow chart of that a UE reports a transmission mode according to an embodiment of the present invention.

### DETAILED DESCRIPTION

The foregoing and other features of the embodiments of the present invention will become apparent by referring to drawings and through the following description. These embodiments are only illustrative and are not used to limit the present invention. In order to make those skilled in the art to readily understand the principles and embodiments of the present invention, the embodiments of the present invention will be described by taking LTE carriers and a massive MTC (MMC) communication system as an example. However, it will be understood that the embodiments of the present invention are not used to limit to the above scenarios. Any scenario involving transmission capability indications and transmission mode configurations are applicable.

In the embodiments of the present invention, the description of the "single-tone" transmission format and the "multi-tone" transmission format is also taken for clear illustration. In the field of the invention, "carrier" can be replaced by other expressions, such as "single carrier", "single sub-carrier", "multiple carrier", " multiple subcarrier", and the like, and, however, the embodiments of the present invention are not limited thereto. In the embodiments of the present invention, the term "tone spacing" can be "tone width", "carrier gap", etc., and, however, the embodiments of the present invention are not limited thereto.

In a project which is passed newly and related to new Intemet-of-things in Reversion 13 (R13) of long term evolution (LTE), the RF bandwidth of the Intemet-of-things can be as small as the order of 180 kHz. One advantage of this evolution is that the cost of RF is further reduced. Another advantage is that such options on system bandwidth and transmission bandwidth help to find more deployment spectrums for the Intemet-of-Things (such as MTC) applications. For example, the GSM system will be gradually withdrawn from commercial operation in the near future. The bandwidth with order of 180kHz is compatible with the existing GSM system. Therefore, the MTC carrier of the bandwidth with order of 180kHz is easier to be deployed in the existing GSM band during the period when GSM is gradually withdrawn. Such an MTC carrier is an independent MTC carrier, and the transmission and reception on an independent carrier (also referred to as spectrum or frequency band) is referred to as stand-alone deployment. On the other hand, the actual transmission bandwidth on the order of 180kHz is consistent with the minimum transmission unit resource block (RB) of the LTE system if such an MTC carrier can be deployed in an LTE system and is compatible with the original public/specific channel and signal of the LTE system. Transmission or reception within a range which is in another system frequency band and less the than another system bandwidth is referred to as in-band deployment. In addition, the MTK carrier of the bandwidth on the order of 180kHz may be deployed on a guard band of the LTE system. For example, the LTE original bandwidth may be extended to the guard band by one or more RBs to serve as the MTC carrier by maitaining the LTE modulation scheme and numerology; in another example, the guard band is used for the MTC carrier by using a new modulation scheme (such as single carrier modulation) or numerology different from the existing LTE, for example, for a different subcarrier spacing, the spectrum mask (MASK) can meet the protocol requirements through filtering. This transmission or reception on the guard band of another system is referred to as guard band deployment. These methods will provide greater flexibility for future MTC deployment and help the MTC industry to grow well. These application scenarios are used for illustration, and the present invention is not limited thereto.

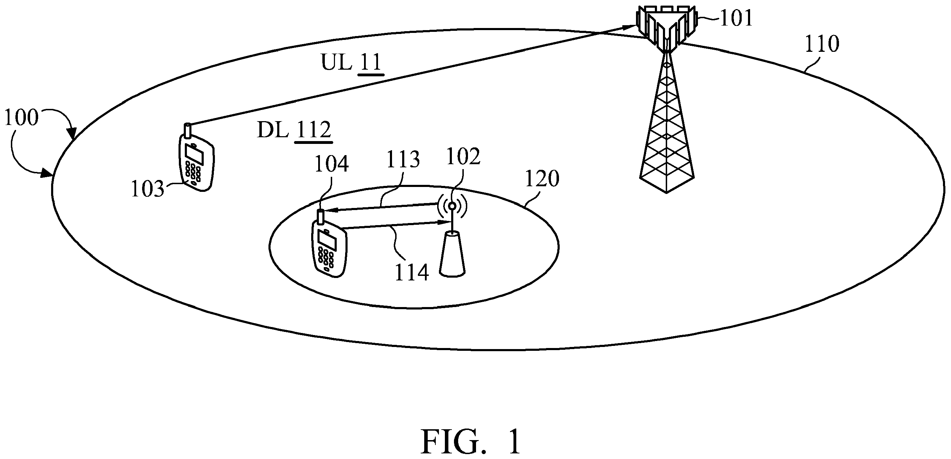

FIG. 1 is a schematic block diagram of a wireless communication system according to an embodiment of the present invention. The wireless communication system 100 comprises one or more base stations 101 and 102 which form one or more access networks 110 and 120 distributed within a geographic area. The access networks 120 and 110 may be universal terrestrial radio access networks (UTRANs) for WCDMA technology, or E-UTRAN or GSM / GPRS technology for LTE / LTE-A technology. A base station may also be referred to as an access point, a node B, an evolved node B (eNB), or other terminology used in the art. In some systems, one or more base stations are coupled to a controller to form an access network in communication with one or more core networks.

In FIG. 1, one or more UEs 103 and 104 are wirelessly coupled to base stations 101 and 102 for obtaining wireless services within a service area, such as, a cell or a cell sector. An UE may be referred to as UE (UE), a wireless communication device, a terminal, or other terminology. In FIG. 1, the UE 103 is illustrated as a hand-held terminal; however, the UE 103 is not limited to a hand-held terminal. The UE 103 may be a non-hand-held terminal, Intemet-of-Things, or large-scale equipment. The UE 103 transmits UL data to the base station 101 through an UL channel 111 in the time and/or frequency domain. The UE 104 transmits UL data to the base station 102 through the UL channel 114 in the time and/or frequency domain. The serving base stations 101 and 102 transmit DL signals to the UEs 103 and 104 through the DL channels 112 and 113, respectively. In one embodiment, the system utilizes OFDMA technology or other multi-carrier technology on DL, and the communication system may utilize next-generation single carrier (SC) technology based on OFDMA technology or FDMA architecture or other single carrier technology, such as single carrier technology based on GMSK modulation and the like, on UL transmission.

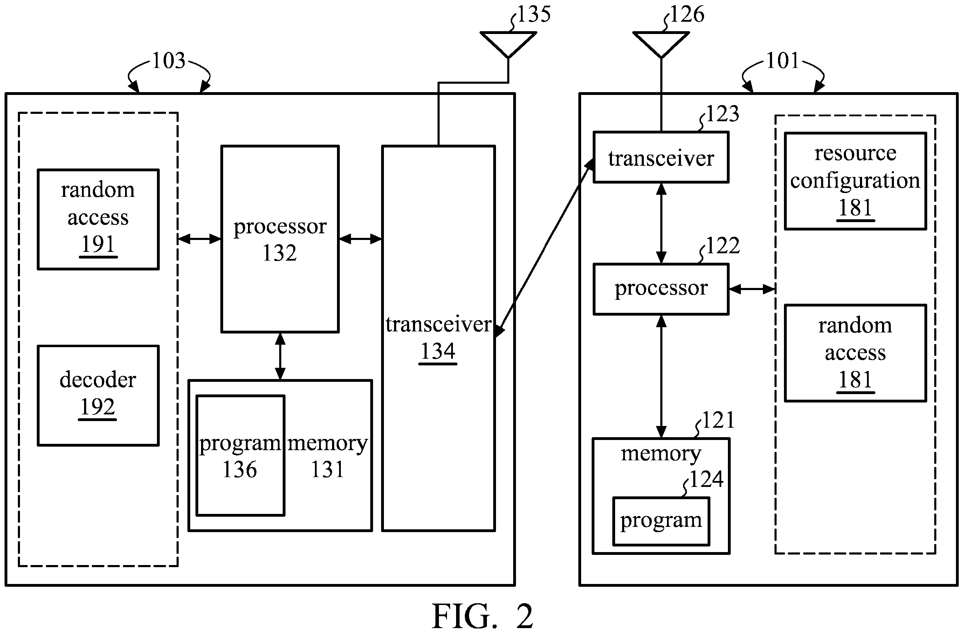

FIG. 2 shows a simplified block diagram of the UE 103 and the base station 101 according to the described embodiments of the present invention. The base station 101 comprises an antenna 126 which transmits and receives wireless signals. An RF transceiver module 123 is coupled to the antenna and receives RF signals from the antenna 126, converting them to baseband signals, and transmits the baseband signals to a processor 122. The RF transceiver module 123 further converts the baseband signals received from the processor 122 to RF signals and sends them to the antenna 126. The processor 122 processes the received baseband signals and invokes different functional blocks to perform features in the base station 101. A memory 121 stores program instructions and data 124 to control the operation of the base station 101.

In accordance with the embodiment of the present invention, the base station 101 further comprises other functional modules for implementing embodiments of the present invention. For example, the base station 101 comprises a resource configuration module 181 for allocating different resources for a single tone and a multiple tone, and further comprises a random access control module 182 for controlling the random access procedure. For example, the random access control module 182, according the resources for the single tone and the multiple tone, generates random access information which is transmitted to the UE during the random access procedure, and according to the transmission mode and the transmission format, further generates random access response with parameters. Only a part of the modules for implementing the embodiments of the present invention are shown. The above modules may be implemented in hardware, software or firmware, or a combination of any of the above, and the present invention is not limited thereto.

The UE 103 comprises an antenna 135. The antenna 135 transmits and receives wireless signals. An RF transceiver module 134 is coupled to the antenna, receiving RF signals from the antenna 135, converts them to baseband signals, and transmits the basebands to the processor 132. The RF transceiver module 134 further converts the baseband signals received from the processor 132 to RF signals, and sends them to the antenna 135. The processor 132 processes the received baseband signal and invokes the different functional modules to perform features in the UE 103. A memory 131 stores program instructions and data 134 to control the operation of the UE 103.

In accordance with the embodiment of the present invention, the UE 103 further comprises other functional modules for implementing embodiments of the present invention. For example, the UE 103 receives a random access resource configuration from the base station through the transceiver 134 in the communication network. Then, an random access processing module 191 selects random access resources according to the transmission mode capability of the UE and transmits a first message using the selected random access resources. The transceiver 134 transmits a third message according to the random access response RAR, wherein the third message contains the information of the transmission mode supported by the UE. The UE 103 further comprises a decoding module for decoding the PUSCH according to the transmission mode information in the RAR and the resource configuration information in the PDCCH. Only a part of the modules for implementing the embodiments of the present invention are shown. The above modules may be implemented in hardware, software or firmware, or a combination of any of the above, and the present invention is not limited thereto.

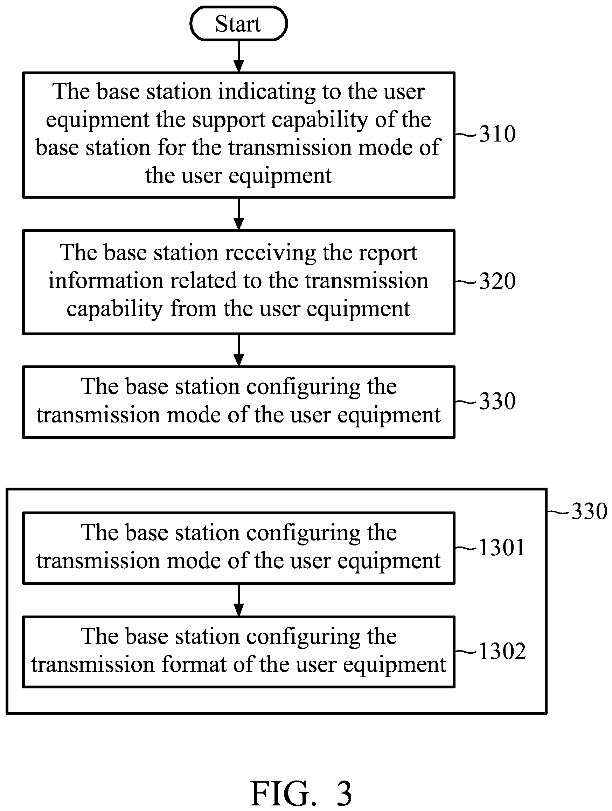

FIG. 3 is a schematic diagram showing that a base station configures a transmission mode for a UE according to an embodiment of the present invention. In step 310, the base station indicates to the UE the configuration information for the transmission mode of the UE, wherein the transmission mode may be a single-tone transmission mode and/or a multi-tone transmission mode. In step 320, the base station receives the report information from the UE. The report information is used by the UE to indicate to the base station the uplink transmission capability of the UE. The features of the transmission capability comprise a transmission mode which the UE can use. The transmission mode may be a single-tone transmission mode and/or a multi-tone transmission mode. In step 330, the base station configures the transmission mode for the UE.

In step 310, the transmission mode configuration information of the base station to the UE may be one or more of the following capabilities:
(1) the base station only supports the demodulation for the received signals from the UE in the single-tone transmission mode; (2) the base station only supports the demodulation for the received signals from the UE in the multi-tone transmission mode; (3) The base station may support demodulation for received signals from the UE in the single-tone and/or multi-tone transmission mode.

In step 310, the base station may indicate to the UE the support capability of the base station for the UE transmission mode through an explicit method. For example, the base station may include the capability indication information in one or more of the following signaling and/or information:
(1) It is included in broadcast information and/or master information block (MIB) information. For example, the indication information is included in MIB information carried by a physical broadcast channel (PBCH).
(2) It is included in system information block (SIB) information. For example, the indication information is included in SIB information carried by a PDSCH, a physical downlink channel (PDCH), or a physical shared channel (PSCH).
(3) It is included in signaling and/or information which is present when the base station first responds to an access request of the UE at the first time during random access (RA) procedure, for example, an RAR message or a second message (Message, MSG2) transmitted by the base station to the UE during the RA procedure. The RAR message may be carried by a PDSCH or a physical layer downlink control channel (PDCCH).
(4) It is included in a common physical downlink control information, and may be carried, for example, by a PDCCH or a PDSCH.
(5) It is included in the specific physical downlink control information of the UE and may be carried, for example, by a PDCCH or a PDSCH.
(6) It is included in the information element (IE) of the MAC layer, and may be carried, for example, by the RAR message.
(7) It is included in common RRC signaling.
(8) It is included in UE specific RRC signaling. For example, it is included in a connection setup message sent by the base station to the UE, that is, in an RRCConnectionSetup message.

In the explicit indication method, the capability indication information may be embodied as one or more of the following information:
(1) The base station may demodulate an uplink signal adopting which type of transmission mode, for example, a single-tone transmission mode or a multi-tone transmission mode or both of the single-tone transmission mode and the multi-tone transmission mode. In one example, the base station places two-bit information in the information. Bits '01' indicates that only the demodulation for the signals of the single-tone transmission mode is supported, bits '10' indicates that only the demodulation for the signals of the multi-tone transmission mode is supported, bits '11' indicates that the demodulation for the signals of both the single-tone transmission mode and the multi-tone transmission mode is supported. Note that, this case is only one example of the embodiment of the present invention, and the present invention is not limited thereto.
(2) The base station supports which type of UE. In one example, a UE supporting the single-tone signal transmission is defined as one type UE. The UE supporting the multi-tone signal transmission is defined as another type UE. The UE supporting the single-tone signal transmission and the multi-tone signal transmission is further yet another type UE. The base station may explicitly list the types of UE supported by the base station in the capability indication information.
(3) Time-frequency resources which can be used by the physical uplink shared channel (PUSCH) supported by the base station. In one example, the base station may support the single-tone transmission mode and the multi-tone transmission mode. For example, the base station may support a single-tone transmission format of 3.75 kHz subcarrier spacing, a single-tone transmission format of 15 kHz subcarrier spacing, and the multi-tone transmission format of 15 kHz subcarrier spacing. The base station may inform the UE that which time-frequency resources are used to transmit signals of which one or two transmission format in the information element (IE), PUSCH-Config IE of the RRC signaling.
(4) A random access (RA) signal transmission format configured by the base station. As described above, there are three cases: first, the base station only configures the demodulation for the received signals from the UE in the single-tone transmission mode; second, the base station configures the demodulation for the received signals from the UE in the multi-tone transmission mode only; and third, the base station may configure demodulation for received signals from the UE in the single-tone and/or multi-tone transmission mode. Accordingly, the configuration information of the base station for the transmission mode of the UE may be, respectively, first, random access resources all for the multiple tone; or second, random access resources all for multiple tone; or third, a set of random access resources for a single tone and a set of random access resources for the multiple tone.
   For example, if the UE selects the single-tone mode, the UE can transmit an RA request signal using a single-tone modulation manner, or if the UE selects the multi-tone mode, the UE can transmit an RA request signal using the multi-tone modulation scheme.
   Further, for example, when the UE selects the single-tone mode or the multi-tone mode and further selects one of a plurality of subcarrier spacings supported by the transmission mode, the UE may, according to the indication from the base station, transmit an RA request signal by using the transmission format corresponding to the selected transmission mode and the subcarrier spacing. In another example, the transmission mode may be embodied as a transmission period and an offset. In another example, the UE may transmit an RA request signal capable of carrying an RA request signals, and the transmission format of this RA request signal may be the transmission format of the RA request signal transmitted and/or generated by the UE, such as, an information scrambling sequence and/or scrambling format, the number of redundant bits of the CRC check, or an equation/polynomial of the CRC check.
(5) The locations of the time-frequency resources for the transmission of the RA signal configured by the base station. In one example, the base station indicates the UE to select time-frequency resources from which set of different candidate resources for the RA request signal transmitted by the UE if the UE selects a different transmission mode. For example, if the UE selects the single-tone mode, it can transmit an RA request signal in the time-frequency resources corresponding to the single-tone mode, or if the user device selects the multi-tone mode, it can send an RA request signal in the time-frequency resources corresponding to the multi-tone mode. Alternatively, for example, if the UE selects the single-tone mode or the multi-tone mode and further selects one of a plurality of subcarrier spacing supported by the selected mode, the UE may transmit an RA request signal by using the time-frequency resources corresponding to the selected mode and the selected subcarrier spacing according to the indication from the base station.
(6) The content of the RA signal transmission supported by the base station. In an example, if the UE determines that it supports a different transmission mode, the UE should select the RA request signal to be transmitted from which set of different candidate signals. For example, if the UE selects the single-tone mode, the UE may select one signal from a set of candidate signals corresponding to the single-tone mode to serve as the RA request signal to be transmitted, or if the UE selects the multi-tone mode, the UE may select one signal from a set of candidate signals corresponding to the multi-tone mode to serve as the RA request signal to be transmitted. Further, for example, if the UE may select the single-tone mode or the multi-tone mode and further selects one of a plurality of subcarrier spacing supported by the selected mode, the UE may select one signal from a set of candidate signals corresponding to the selected mode and the selected subcarrier spacing according to the indication from the base station to serve as the RA request to be transmitted. The set of the candidate signals set may be a set of candidate pseudo-random sequences. The set of the candidate signals may contain a plurality of selectable signals or only one selectable signal. For convenience in illustration, the above case is only an example, and the present invention is not limited thereto.
(7) The signal transmission format corresponding to the single-tone mode and/or multi-tone mode supported by the base station, such as subcarrier spacing, cyclic prefix (CP) length, frame structure, the maximum number of subcarriers of the transmission signals, the locations of the time-frequency resources which can be used in the single-tone mode and/or multi-tone mode.

In step 310, the base station may also indicate to the UE the support capability of the base station for the UE transmission mode by an implicit method. For example, the base station may indicate to the UE the support capability of the base station for the UE transmission mode by transmitting different downlink synchronization signals, wherein different downlink synchronization signals correspond to different transmission modes or different transmission formats. The different downlink synchronization signals may be represented by different demodulation capabilities of the base station to different sequences and/or different transmission modes and/or different transmission time-frequency resource locations of primary synchronization signals (PSS) with respect to the base station, or by different demodulation capabilities of the base station to different sequences and/or different transmission modes and/or different transmission time-frequency resource locations of secondary synchronization signal (SSS). The transmission mode may be expressed as a transmission period, an offset of a transmission starting location, or the like. In another example, the base station may also indicate to the UE the reception demodulation capability of the base station by configuring the base station to different cell IDs. For example, different transmission modes correspond to different sets of cell IDs. The base station selects the cell ID spontaneously, the network selects the cell ID for the base station, or, during the network deployment, the deployment workers selects the cell ID for the base station from a set of cell IDs corresponding to the demodulation capability of the base station.

In step 320, the feature of the above uplink transmission capability may be embodied as which transmission mode the UE cannot use for uplink transmission. The report information may further include that the UE recommends the base station a preferred transmission mode suitable for the UE. The base station may receive and analyze the report information by using a reception implementation scheme corresponding to a manner which is used by the UE to generate and transmit the report information. For example, in step 320, the UE reports whether it supports the multiple tone.

In another example, the base station configures the transmission mode and/or transmission format of the UE by sending a response message in response to for a report message to the UE, and step 330 is implemented based on the configured transmission mode and/or transmission format. More specifically, the base station may implement step 330 by this manner through UE dedicated physical control information/channels or UE specific RRC signaling.

In step 330, the base station configures the transmission mode of the UE, wherein the transmission mode may be a single-tone transmission mode and/or a multi-tone transmission mode.

In addition, the base station may also configure the transmission format of the UE, wherein the transmission format may be one or more subcarrier spacings among a plurality of subcarrier spacings supported by the transmission mode which is configured by the base station for the UE and used by the UE to transmit signals. The feature of the transmission format may be a feature other than a plurality of subcarrier spacings supported by the transmission mode which is configured by the base station for the UE and used by the UE to transmit signals, including cyclic prefix (CP) length, a frame structure, the maximum number of subcarriers of the signals for the multi-tone transmission mode, the locations of the time-frequency resources which can be used by the UE for the single-tone mode and/or multi-tone mode, and so on, and, however, the present invention are not limited thereto.

In one example, the base station may implement step 330 by one or more of the following schemes:
(1) The base station configures the transmission mode and/or the transmission mode of the UE by using the signaling and/or information which the first time UE responds to the access during the random access (RA) process, such as by using the RA response (RAR) message or Message 2 transmitted by the base station to the UE during RA. The RAR message may be carried by a physical downlink shared channel (PDSCH) or a physical downlink control channel (PDCCH).
(2) The base station configures the transmission mode and/or the transmission format of the UE by using an UE-specific physical downlink control information/channel.
(3) The base station configures the transmission mode and/or the transmission mode of the UE by using a paging message.
(4) The base station configures the transmission mode and/or the transmission format of the UE by using an information element (IE) of a medium access control (MAC) layer.
(5) The base station configures the transmission mode and/or the transmission mode of the UE by using radio resource control (RRC) layer signaling dedicated to the UE. The RRC signaling may be one or more of signaling RRCConnectionSetup, RRCConnectionReconfiguration, RRCConnectionReestablishment, and so on, and, however, the present invention is not limited thereto.

For step 330 in FIG. 3, it can be further divided into two steps:
Step 1301: The base station configures the transmission mode of the UE;
Step 1302: The base station configures the transmission format of the UE.
Wherein, the base station may configure the transmission mode by using one of the above schemes for implementing step 330 to implementation step 1301, and it will not be described again. Then, the base station may implement step 1302 by one or more of the following schemes (subcarrier spacing, not expressly illustrated):
(1) The base station configures the transmission format of the UE by using an UE-specific physical downlink control information/channel. For example, the transmission mode configuration information is included in an uplink physical channel scheduling instruction, or the transmission mode configuration information is included in a power control instruction and/or a timing advance adjustment instruction.
(2) The base station configures the transmission mode of the UE by using a paging message.
(3) The base station configures the transmission format of the UE by using an IE of a MAC layer.
(4) The base station configures the transmission mode of the UE by using RRC layer signaling dedicated to the UE. The RRC signaling may be RRCConnectionSetup, RRCConnectionReconfiguration, or RRCConnectionReestablishment, and so on, and, however, the present invention is not limited thereto.

It should be noted that, in some cases, for example, by prior agreement, step 1301 may be omitted if the base station and the UE have the same understanding about the transmission mode and know that only one transmission mode may be used. In other cases, if the base station and the UE have the same understanding about the transmission format and know that only one transmission format may be used.

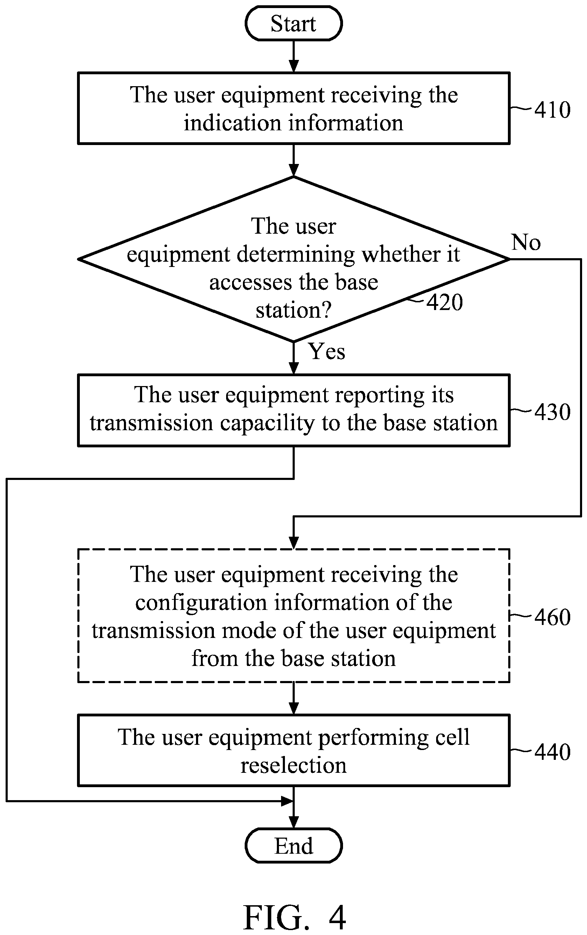

FIG. 4 is a flowchart of a method for an UE to report its transmission capability to a base station according to an embodiment of the present invention. Referring to FIG. 4, the method comprises: step 410, the UE receives the configuration information transmitted from the base station and used to indicate the transmission mode of the UE, wherein the transmission mode may be a single-tone transmission mode and/or a multi-tone transmission mode. Step 420: The UE determines whether it can access the base station according to the capability of the UE. If the result of the determination is that the UE can access the base station, the method proceeds to step 430, and if the result of the determination is that the UE cannot access the base station, the method proceeds to step 440. In step 430, the UE reports its transmission capability to the base station, wherein the feature of the transmission capability comprises the transmission mode that the UE can use. The transmission mode may be a single-tone transmission mode and/or a multi-tone transmission mode. In step 440, the UE performs cell reselection and seaches for other cells that can be accessed.

Wherein, the UE transmission capability may be embodied as one or more elements of: (1) the UE may transmit an uplink signal by using the single-tone transmission mode; (2) the UE may transmit an uplink signal by using the single-tone transmission mode; (3) The UE may transmit the uplink signal by using the single-tone transmission mode and/or the multi-tone transmission mode. (4) The uplink transmission capability may be an uplink transmission mode which cannot be adopted by the UE. In one example, the UE is aware that all the single-tone transmission modes and the multi-tone transmission modes supported by the base station and/or make a prior agreement for a manner by which the UE reports its transmission capability to the base station. The UE may perform only step 430.

Wherein, the contents of the indication information from the base station and the method for transmitting the indication information in the step 410 are disclosed in FIG. 3 and will not be described again. In step 420, the UE may determine in advance whether its own transmission capability matches the support capability of the base station for the transmission mode of the UE. The result of the pre-determination indicating matching means that the base station is capable of demodulating transmission signals from the UE. For example, if the UE is capable of transmitting signals modulated in the single-tone mode and the cell base station which the UE tries to access is capable of demodulating signals modulated in the single-tone mode and the multi-tone mode, the pre-determined result indicates matching. For another example, if the UE is capable of transmitting signals modulated in the multi-tone mode and the cell base station which the UE tries to access is capable of demodulating signals modulated only in the single-tone mode, the pre-determined result indicates mismatching. In other words, if the UE supports the multiple tone and all the random access resources are random access resources for the multiple tone or one set of random access resources is for a single tone and one set of random access resources is for the multiple tone, the UE selects resources for random access from the random access resources for the multiple tone; and if the UE supports single tone and all the random access resources are random access resources for single tone, or one set of random access resources is for single tone, and one set of random access resources is for the multiple tone, the UE selects resources for random access from the random access resources for a single tone. If the result of the pre-determination indicates mismatching, the determination result of the UE in step 420 is that the cell base station cannot be accessed. If the result of the pre-determined determination indicates matching, the determination result of the UE in step 420 is that the cell base station can be accessed. The UE may go on to determine whether other access grant conditions are met. For example, the UE may determine whether the base station is accessible for the UE based on the received system message transmitted by the base station, that is, whether the user device is barring to the base station. In this case, only when the determination result indicates matching and all access grant conditions are met, the determination result of the UE in step 420 is that the cell base station can be accessed. It should be noted that the above-mentioned invention contents are merely examples, and the present invention includes above-mentioned invention contents but is not limited thereto.

In step 420, the step of the UE determining its transmission capability further comprises selecting a transmission mode and/or transmission format suitable for the UE, wherein the transmission format may be one or more subcarrier spacings among a plurality of subcarrier spacing supported by the transmission mode which is selected by the UE. The UE may select a transmission mode and/or transmission mode suitable for the UE according to one or several of the following factors: (1) loss condition estimation of the downlink; (2) characteristic of UE mobility. Each of the above factors can be estimated by measuring the downlink transmission signal received from the base station by the UE.

In step 430, the UE may report the transmission capability to the base station by an explicit method, that is, the UE may explicitly report the transmission capability of the UE to the base station. For example, the UE makes the capability report information to be included in one or more of the following signaling and information:
(1) It is included in a random access (RA) request signal. In one example, the UE may send an RA request signal capable of carrying a message. The UE may place the contents of the report information in an RA request signal. In another example, the UE transmits an independent sequence before transmitting the RA request message. The transmitted sequence may help the base station to estimate the timing when the UE transmits signals and may also be used to indicate the transmission capability of the UE. For example, different sequences are corresponding to different transmission modes and/or transmission formats.
(2) It is included the first message transmitted to the base station by the UE after the RA request signal. In one example, the UE may place the content of the report information in message 3 (Message 3, Msg3) during the RA process.
(3) It is included in upper layer signaling transmitted the UE to the base station. In one example, it may be included in the first upper layer signaling transmitted to the base station by the UE after the RA procedure, such as, RRCConnectionRequest signaling. In another example, it may also be included in UE Capabilitylnformation signaling.

The report information may be embodied in one or more of the following information:
(1) The transmission mode which is suitable for the UE and preferably selected by the UE is a single-tone transmission mode, or a multi-tone transmission mode or a single-tone and multi-tone transmission mode. In one example, the UE places one bit information in the message. '0' indicates that a single-tone signal transmission is preferable selected and '1' indicates that the multi-tone signal transmission is preferable selected. Alternatively, '0' indicates that the multiple-tone signal transmission is not supported, '1' indicates that the multi-tone signal transmission is supported. Note that, the above-described examples are merely examples of embodiments of the present invention, and the present invention is not limited thereto.
(2) The UE is suitable to which one or more of the one or more subcarrier spacing supported by the selected transmission mode. In one example, the UE selects the single-tone transmission mode, the single-tone transmission mode supports the carrier spacing of 15 kHz, 7.5 kHz, 3.75 kHz, and 2.5 kHz, and the UE uses 2-bit information to indicate which subcarrier spacing is applicable. In yet another example, the UE selects the single-tone transmission mode, the single-tone transmission mode supports the carrier spacing of 15 kHz and 2.5 kHz, and the UE uses 1-bit information to indicate which subcarrier spacing is applicable. In another example, the UE selects the single-tone transmission mode, the single-tone transmission mode supports carrier spacing of 15 kHz and 3.75 kHz, and the UE uses 1-bit information to indicate which subcarrier spacing is applicable. Note that this example is only one example of the embodiment of the present invention, and the present invention is not limited thereto.

In step 430, the report information which is transmitted by the UE to the base station may be embodied as one or more of the following:
(1) The base station may transmit signals by using a single-tone transmission mode or a multi-tone transmission mode or both of the single-tone transmission mode and the multi-tone transmission mode. In one example, the base station places two-bit in the information. '01' indicates that only the signal transmission modulated in the single-tone transmission mode is supported, '10' indicates that only the signal transmission modulated in the multi-tone transmission mode is supported, '11' indicates that the signal transmission modulated in both the single-tone transmission mode and the multi-tone transmission mode is supported. Note that, this case is only one example of the embodiment of the present invention, and the present invention is not limited thereto.
(2) The type of UE. In one example, a UE supporting the single-tone signal transmission is defined as one type of UE. The UE supporting the multi-tone signal transmission is defined as another type of UE. The UE supporting the single-tone signal transmission and the multi-tone signal transmission is further yet another type of UE. The UE may explicitly list the types of UE supported by the base station in the report information

In step 430, the UE may also perform step 330 by an implicit method, that is, the UE implicitly reports the transmission capability of the UE to the base station.

In one example, the base station indicates to the UE its support capability for the transmission mode of the UE and instructs the UE to transmit the RA request signal in a different format according to the selected different transmission mode. In another example, the UE may use a different format for generating the report information/signals, such as an information scrambling sequence and/or scrambling format, the number of redundant bits of the CRC check, or an equation/polynomial of the CRC check. By using the format, the UE may transmit the report information via the RA request information or the first message which is transmitted to the base station by the UE after the RA request information.

Optionally, after step 430, prior to step 440, the UE may also perform step 460. Step 460: The UE receives the configuration information from the base station. Wherein, the configuration information is used to configure the transmission mode of the UE. The transmission mode may be a single-tone transmission mode and/or a multi-tone transmission mode. For example, through PDCCH. The UE decodes the information in the PDCCH to obtain the resources of the PUSCH.

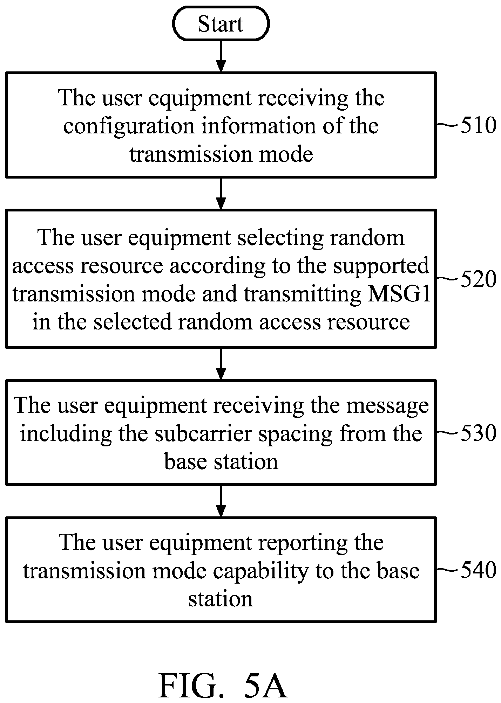

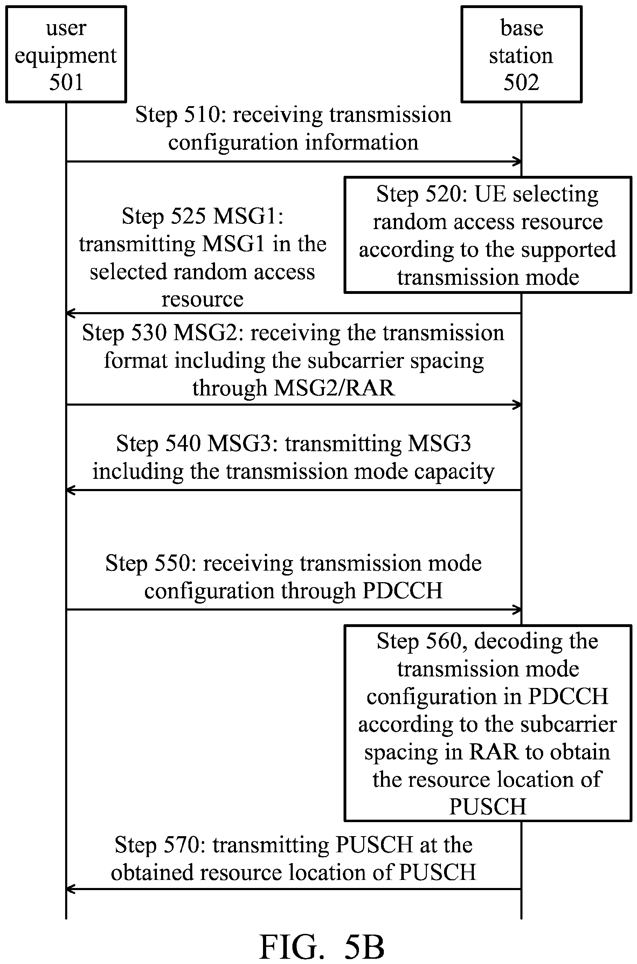

FIG. 5A shows a method for reporting and configuring a transmission mode and capability supported by an UE according to an embodiment of the present invention. According to the embodiment of the present invention, the transmission mode of the UE configured by the base station includes at least one of a multiple tone and a single tone, and the UE further reports information to the base station according to the transmission mode supported by the UE. Specifically, referring to FIG. 5A and FIG. 5B, wherein comprising: step 510, the UE receives configuration information of the transmission mode from the base station, and the configuration information may include the locations of the time-frequency resources of the RACH signal transmission supported by the base station. For example, in the base station, two bits of the system information block (e.g., SIB) are used to indicate support for the transmission mode of the PRACH message of the UE. The two bits can represent four cases: only a single tone is configured, only a multiple tone is configured, a single tone and a multiple tone are configured at the same time. One skilled in the art would understand that there are different resource rations when both the single tone and the multiple tone are configured at the same time. In step 520, according to the support of the transmission mode, the UE selects the RA resources corresponding to the transmission mode, and then in step 525, the MSG1 is transmitted in the selected random access resources. Wherein, there is a relationship between the random access resources and the transmission mode. As shown in the embodiment of FIG. 3 and FIG. 4, the configuration information transmitted by the base station includes time-frequency resources that can be used by the physical uplink shared channel (PUSCH). As described above, there are three cases: first, the base station only configures the demodulation for the received signals from the UE in the single-tone transmission mode; second, the base station only configures the demodulation for the received signals from the UE in the multi-tone transmission mode only; and third, the base station may configure demodulation for received signals from the UE in the single-tone and/or multi-tone transmission mode. Accordingly, the configuration information of the base station for the transmission mode of the UE may be, respectively: first, random access resources all for the multiple tone; or second, random access resources all for multiple tone; or third, a set of random access resources for a single tone and a set of random access resources for the multiple tone.

In step 530, the UE receives the RAR which includes the subcarrier spacing from the base station. Then in step 540, the UE transmits a MSG3 which includes the transmission mode capability of the UE. For example, one bit is used to indicate whether the multiple tone is supported. Then in step 550, the UE receives the transmission mode configuration through the PDCCH. In step 560, the UE decodes the reception mode configuration in the PDCCH according to the received subcarrier spacing in the RAR to obtain the resource locations of the PUSCH. For example, the resource locations for the PUSCH in the PDCCH indicates the starting sub-frame and the number of subcarriers. When the carrier spacing is 3.75 kHz or 15 kHz, the information of the reception mode configuration in the PDCCH may be different. Then, in step 570, the PUSCH is transmitted at the obtained resource locations of the PUSCH.

FIG. 5B shows a method for reporting and configuring a transmission mode and capability supported by an UE according to an embodiment of the present invention. According to the embodiment of the present invention, the transmission mode of the UE configured by the base station for the RACH information contains at least one of a multiple tone and a single tone, and the UE further selects the transmission mode supported by itself and reports this to the base station. Specifically, referring to FIG. 5B, wherein comprising: step 510, the UE receives configuration information of the transmission mode from the base station, and the configuration information may include the locations of the time-frequency resources of the RACH signal transmission supported by the base station. For example, in the base station, two bits of the SIB are used to indicate the configuration for the transmission mode of the PRACH message of the UE. In step 520, according to the support of the transmission mode, the UE selects the RA resources corresponding to the transmission mode for transmitting the MAGI. Wherein the configuration information contains random access resources, and there is a relationship between the random access resources and the transmission mode. As shown in the embodiment of FIG. 3 and FIG. 4, the configuration information transmitted by the base station includes time-frequency resources that can be used by the physical uplink shared channel (PUSCH). As described above, there are three cases: first, the base station only configures the demodulation for the received signals from the UE in the single-tone transmission mode; second, the base station only configures the demodulation for the received signals from the UE in the multi-tone transmission mode only; and third, the base station may configure demodulation for received signals from the UE in the single-tone and/or multi-tone transmission mode. Accordingly, the configuration information of the base station for the transmission mode of the UE may be, respectively, first, random access resources all for the multiple tone; or second, random access resources all for multiple tone; or third, a set of random access resources for a single tone and a set of random access resources for the multiple tone.

For example, then in step 525, MSG1 is transmitted in the selected random access resources. In step 530, the UE receives the RAR which includes the subcarrier spacing from the base station. Then in step 540, the UE transmits a MSG3 which includes the transmission mode capability of the UE. For example, one bit in the MSG3 is used to indicate whether the multiple tone is supported. Then in step 550, the UE receives the transmission mode configuration through the PDCCH. In step 560, the UE decodes the received transmission mode mode configuration in the PDCCH according to the received subcarrier spacing in the RAR to obtain the resource locations of the PUSCH. For example, when the subcarrier spacing is 3.57kHz, the decoding is performed for the PDCCH to obtain the starting sub-frame and the number of subcarriers. When the subcarrier spacing is 15kHz, the decoding is performed for the PDCCH to obtain the starting sub-frame and the number of subcarriers. Then, in step 570, the PUSCH is transmitted at the obtained resource locations of the PUSCH.

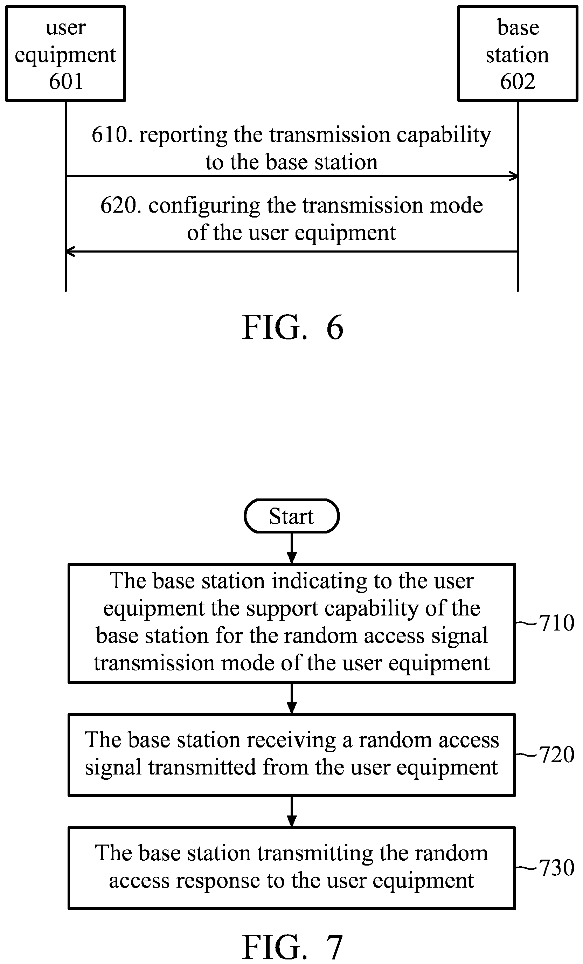

FIG. 6 is a flow diagram of that an UE 601 reports and receives transmission mode configuration to a base station 602 in accordance with an embodiment of the present invention. Step 610: The UE reports its transmission capability to the base station. Step 620: The base station configures UE the transmission mode. Please refer to FIG. 3 and FIG. 4, the details of the implementation are described in the above steps and will not be repeated here. Different from FGs. 3-5, the base station directly determines the transmission mode of the UE after UE reporting, not according to broadcast indication from the base station in advance.

FIG. 7 is a flow diagram of a method of configuring a transmission mode of a UE by a base station according to an embodiment of the present invention. Referring to FIG. 7, the method comprises: Step 710: the base station indicates to the UE its support capability for the random access signal transmission mode of the base station, wherein the transmission mode may be a single-tone transmission mode and/or a multi-tone transmission mode. Step 720: The base station receives random access signals transmitted by the UE. Step 730: The base station transmits a random access response (RAR) to the UE.

In step 710, the support capability of the base station for the random access signal transmission mode of the base station may be one or more of the following capabilities:
(1) The base station only supports the demodulation for the received signals from the UE in the single-tone transmission mode;
(2) The base station only supports the demodulation for the received signals from the UE in the multi-tone transmission mode;
(3) The base station may support demodulation for received signals from the UE in the single-tone and/or multi-tone transmission mode.

The base station may indicate to the UE the support capability of the base station for the random access signal transmission mode by an explicit method. For example, the base station may include the capability indication information in one or more of the following signaling and/or information,
(1) It is included in broadcast information and/or main information block (MIB) information. For example, the indication information is included in MIB information carried by a physical broadcast channel (PBCH).
(2) It is included in system information block (SIB) information. For example, the indication information is included in SIB information carried by a PDSCH, a physical downlink channel (PDCH) channel, or a physical shared channel (PSCH).

In the explicit indication method, the capability indication information may be embodied as one or more of the following information:
(1) The base station may demodulate an uplink signal adopting which type of transmission mode, for example, a single-tone transmission mode or a multi-tone transmission mode or both of the single-tone transmission mode and the multi-tone transmission mode. In one example, the base station places two-bit in the information. '01' indicates that only the demodulation for the signals of the single-tone transmission mode is supported, '10' indicates that only the demodulation for the signals of the multi-tone transmission mode is supported, '11' indicates that the demodulation for the signals of both the single-tone transmission mode and the multi-tone transmission mode is supported. Note that, this case is only one example of the embodiment of the present invention, and the present invention is not limited thereto.
(2) The base station supports which type of UE. In one example, a UE supporting the single-tone signal transmission is defined as one type of UE. The UE supporting the multi-tone signal transmission is defined as another type of UE. The UE supporting the single-tone signal transmission and the multi-tone signal transmission is further another type of UE. The base station may explicitly list the types of UE supported by the base station in the capability indication information.
(3) The RA signal transmission scheme supported by the base station. In one example, the base station instructs or configures to the UE to select which different transmission scheme if the UE selects a different transmission mode to transmit RA signals. For example, if the UE selects the single-tone mode, it can transmit an RA request signal by using the single-tome modulation scheme, or if the UE selects the multi-tone mode, it can transmit an RA request signal by using the multi-tome modulation manner. Alternatively, for example, if the UE selects the single-tone mode and further selects one of a plurality of subcarrier spacing (15kHz subcarrier spacing and 3.75kHz subcarrier spacing) supported by the selected mode, the UE may transmit an RA request signal by using the transmission format corresponding to the selected mode and the selected subcarrier spacing according to the indication from the base station. In another example, the transmission mode may be embodied as a transmission period and an offset. In another example, the UE may transmit an RA request signal capable of carrying an RA request signal, and the transmission format of this RA request signal may be the transmission format of the RA request signal transmitted and/or generated by the UE, such as, an information scrambling sequence and/or scrambling format, the number of redundant bits of the CRC check, or an equation/polynomial of the CRC check
(4) The locations of the time-frequency resources for the transmission of the RA signal configured by the base station. In one example, the base station instructs the UE to select time-frequency resources from which set of different candidate resources for the RA request signal transmitted by the UE if the UE selects a different transmission mode. For example, if the UE selects the single-tone mode, it can transmit an RA request signal in the time-frequency resources corresponding to the single-tone mode, or if the user device selects the multi-tone mode, it can send an RA request signal in the time-frequency resources corresponding to the multi-tone mode. Alternatively, for example, if the UE selects the single-tone mode and further selects one of a plurality of subcarrier spacing (15kHz subcarrier spacing and 3.75kHz subcarrier spacing) supported by the selected mode, the UE may transmit an RA request signal by using the time-frequency resources corresponding to the selected mode and the selected subcarrier spacing according to the indication from the base station.
(5) The content of the RA signal transmission supported by the base station. In an example, the base station instructs the UE to select the RA request signal to be transmitted from which set of different candidate signals if the UE selects a different transmission mode. For example, if the UE selects the single-tone mode, the UE may select one signal from a set of candidate signals corresponding to the single-tone mode to serve as the RA request signal to be transmitted, or if the UE selects the multi-tone mode, the UE may select one signal from a set of candidate signals corresponding to the multi-tone mode to serve as the RA request signal to be transmitted. Further, for example, if the UE may select the single-tone mode or the multi-tone mode and further selects one of a plurality of subcarrier spacing supported by the selected mode, the UE may select one signal from a set of candidate signals corresponding to the selected mode and the selected subcarrier spacing according to the indication from the base station to serve as the RA request to be transmitted. The set of the candidate signals set may be a set of candidate pseudo-random sequences. The set of the candidate signals may contain a plurality of selectable signals or only one selectable signal. For convenience in illustration, the above case is only an example, and the present invention is not limited thereto.

The base station may also indicate to the UE the support capability of the base station for the UE transmission mode by an implicit method. For example, the base station may indicate to the UE the support capability of the base station for the UE transmission mode by transmitting different downlink synchronization signals, wherein different downlink synchronization signals correspond to different transmission modes or different transmission formats. The different downlink synchronization signals may be represented by different demodulation capabilities of the base station to different sequences and/or different transmission modes and/or different transmission time-frequency resource locations of primary synchronization signals (PSS), or by different demodulation capabilities of the base station to different sequences and/or different transmission modes and/or different transmission time-frequency resource locations of secondary synchronization signal (SSS). The transmission mode may be expressed as a transmission period, an offset of a transmission starting location, or the like. In another example, the base station may also indicate to the UE the reception demodulation capability of the base station by configuring the base station to different cell IDs. For example, different transmission modes correspond to different sets of cell IDs. The base station selects the cell ID spontaneously, the network selects the cell ID for the base station, or, during the network deployment, the deployment workers selects the cell ID for the base station from a set of cell IDs corresponding to the demodulation capability of the base station.

In another example, the base station may also carry auxiliary information in step 710. The auxiliary information may help the UE to select a transmission mode and/or transmission mode for its random access signal and/or non-random access signal. How the UE selects its random access signal transmission mode based on the auxiliary information has been disclosed in detail in the embodiment of FIG. 5, and the related description is not described herein.

In steps 720 and 730, the random access response message may contain configuration information of the base station for the transmission mode and/or the transmission format.

In still another embodiment, the UE transmits a random access signal of the single-tone transmission mode or the multi-tone transmission mode. In order to provide the estimation accuracy of the uplink timing, after the base station receives the random access signal transmitted by the UE, and establishes the connection with the UE, the base station may schedule the UE again to transmit random access signals of the multi-tone transmission mod.

Through the implementation method disclosed in this embodiment, the base station may indicate to the UE the support capability of the base station for the UE transmission mode and may also configure the transmission mode and/or the transmission mode of the UE. The invention includes above steps, but is not limited thereto.

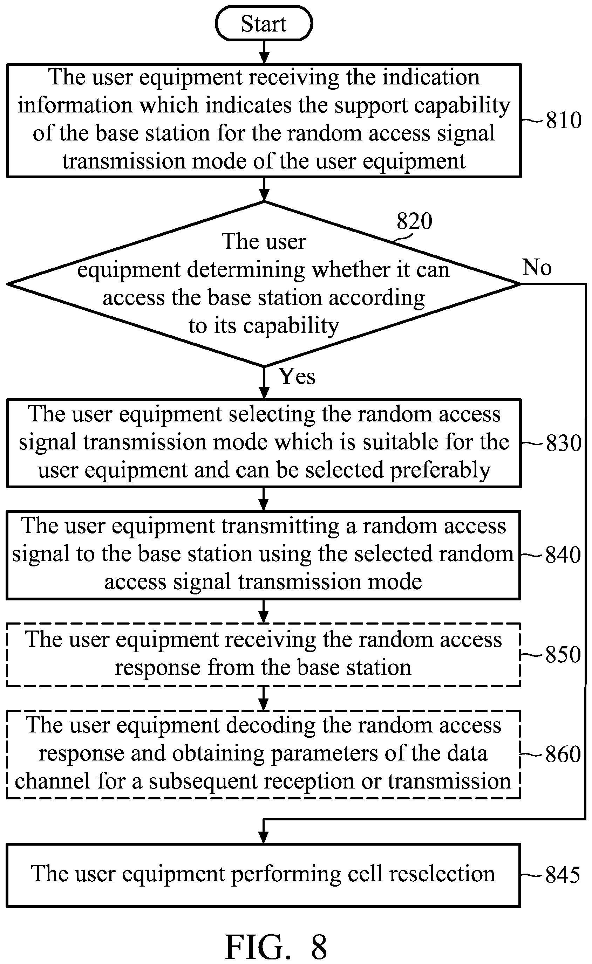

FIG. 8 is a flow chart of a random access method according to an embodiment of the present invention. Referring to FIG. 8, step 810: The UE receives the indication information which is transmitted from the base station and used to indicates the support capability of the base station for the random access signal transmission mode and obtains, based on the indication information, the support capability of the base station for the random access signal transmission mode of the UE. Wherein the transmission mode may be a single-tone transmission mode and/or a multi-tone transmission mode. Step 820: The UE determines whether it can access the base station according to the capability of the UE. If the result of the determination is that the UE can access the base station, the UE performs step 830 and selects a random access signal transmission mode which is suitable for the UE and can be selected preferably. If the result of the determination is that the UE cannot access the base station, the UE implements step 845. Step 845: The UE performs cell reselection and searches for other cells that can be accessed. Step 830: The UE selects a random access signal transmission mode which is suitable for the UE and can be selected preferably. Step 840: The UE transmits a random access signal to the base station using the selected random access signal transmission mode.

The contents of the indication information from the base station and the method for transmitting the indication information in step 810 are clearly disclosed in the embodiments shown of FIG. 3 and FIG. 4, and the relation description will not be omitted herein. The UE may also receive auxiliary information from the base station in step 810. The auxiliary information may help the UE to select a transmission mode and/or transmission mode for its random access signal and/or non-random access signal. For example, the auxiliary information may be threshold value of RSRP (reference signal received power) and or RSRQ (reference signal received quality) and/or SINR (signal-to-noise-plus-interference ratio) and/or for path loss.

In step 830, the UE may select the random access signal transmission mode according to its transmission capability and/or its measurement result for the downlink. For example, the UE has only the single-tone transmission capability, and the UE may select the single-tone transmission mode to transmit the random access signal to the base station. In another example, the UE has multi-tone transmission capability. The UE first measures the downlink signal from the base station to obtain the measurement result of RSRP and/or RSRQ and/or SINR for the downlink signal. Then, the UE then compares its downlink signal measurement result with the threshold value of the RSRP and/or RSRQ and/or SINR received in step 810. If the measurement result is better than the threshold, the UE selects the multi-tone random access signal transmission mode, otherwise, the UE selects the single-tone random access signal transmission mode. Here, "better than the threshold" can be "larger than the threshold, for example, when the measurement result is RSRP or RSRQ or SINR. "better than the threshold" can also mean "less than the threshold value", for example, when the measurement result is the path loss. In step 840, the UE may transmit the random access signal according to the selected random access signal transmission mode and the corresponding configuration from the base station for the mode, and the related description will not be omitted herein.

In step 820, the UE may determine in advance whether its own transmission capability matches the support capability of the base station for the transmission mode of the UE. The result of the pre-determination indicating matching means that the base station is capable of demodulating transmission signals from the UE. For example, if the UE is capable of transmitting signals modulated in the single-tone mode and the cell base station which tries to access the UE is capable of demodulating signals modulated in the single-tone mode and the multi-tone mode, the pre-determined result indicates matching. For another example, if the UE is capable of transmitting signals modulated in the multi-tone mode and the cell base station which tries to access the UE is capable of demodulating signals modulated only in the single-tone mode, the pre-determined result indicates mismatching. If the result of the pre-determination indicates mismatching, the determination result of the UE in step 820 is that the cell base station cannot be accessed. If the result of the pre-determined determination indicates matching, the determination result of the UE in step 820 is that the cell base station can be accessed. The UE may continuously determine whether other access grant conditions are satisfied. For example, the UE may determine whether the base station is accessible for the UE based on the received system message transmitted by the base station, that is, whether the user device is barred to the UE. In this case, only when the determination result indicates matching and all access grant conditions are met, the determination result of the UE in step 820 is that the cell base station can be accessed..

In yet another embodiment, there are steps 850 and 860 after step 840. Step 850: The UE receives a random access response (RAR) from the base station. Step 860: The UE decodes the RAR and obtains parameters for subsequently receiving or transmitting data channel. Wherein, the parameters for subsequently receiving or transmitting data channel comprise at least one of: a power control command, a TA command, a transmission mode, subcarrier spacing, a cyclic prefix (CP), and a frame structure.

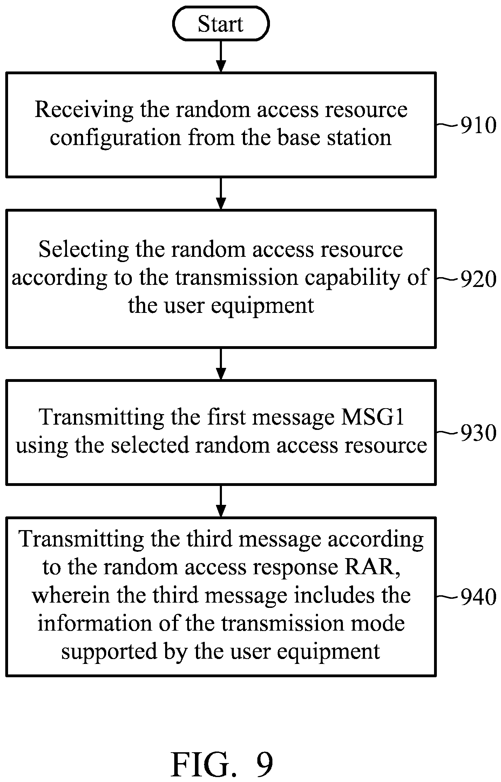

FIG. 9 is a flow diagram of that a UE reports a transmission mode according to one embodiment of the present invention. Referring to FIG. 9, first, in step 910, a random access resource configuration is received from a base station by a UE in a communication network. In step 920, the random access resources are selected according to the transmission mode capability of the UE. In step 930, a first message (MSG 1) is transmitting by using the selected random access resources. In step 940, the UE transmits a third message (MSG3) according to the random access response RAR, wherein the third message contains the information of the transmission mode supported by the UE.

While the present invention has been described in conjunction with specific embodiments for purposes of illustration, the scope of the invention is not limited thereto. Accordingly, retouching, modifications and combinations of the features in the described embodiments may be practiced without departing from the spirit of the invention, the scope of the present invention is defined by the claims.

## Claims

1. A method for reporting a transmission mode, comprising:
receiving a random access resource configuration from a base station by user equipment (UE) in a communication network;
selecting random access resources according to a transmission mode capability of the UE;
transmitting a first message by using the selected random access resources; and
transmitting a third message according to a random access response RAR, wherein the third message contains information of the transmission mode supported by the UE.

2. The method as claimed in claim 1, wherein the transmission mode is one of a single tone or a multiple tone, or both the single tone and the multiple tone.

3. The method as claimed in claim 1, wherein the step of receiving the random access resource configuration from the base station by the UE comprises receiving the random access resource configuration by the UE through one of following manners:
a system information block (SIB), a common downlink control channel, a specific downlink control channel, the random access response (RAR) in a random access procedure, a paging message, a medium access control (MAC) control element (CE), or a radio resource control (RRC) control element (CE).

4. The method of claim 1, wherein the random access resource configuration comprises at least one of following: all random access resources are used for a single tone, a set of random access resources are used for the single tone and a set of random access resources are used for a multiple tone, or all random access resources are used for the multiple tone.

5. The method of claim 4, wherein if the UE supports the multiple tone, all random access resources are used for the multiple tone, or a set of random access resources are used for the single tone and a set of random access resources are used for the multiple tone, the UE selects resources for random access from the random access resources for the multiple tone; and
if the UE supports the single tone, and all random access resources the used for the single tone, or a set of random access resources are used for the single tone and a set of random access resources are used for the multiple tone, the UE selects resources for random access from the random access resources for the single tone.

6. The method of claim 1, wherein the RAR contains at least one of following parameters:
a power control command, a timing advance (TA) command, the transmission mode, a subcarrier spacing, a cyclic prefix (CP), and a frame structure.

7. The method of claim 1, wherein the method further comprising: obtaining transmission format information from a physical downlink control channel (PDCCH) by the UE.

8. The method of claim 7, wherein the UE decodes resources transmitted on a physical uplink shared channel (PUSCH) according to the transmission format information obtained from the PDCCH, wherein, when subcarrier spacing included in the RAR is 3.75 kHz or 15 kHz.

9. The method of claim 8, wherein the decoded resources transmitted on the PUSCH comprises subcarrier indexes and a number of starting subcarrier.

10. A user equipment (UE) for reporting a transmission mode, comprising:
a transceiver receiving a random access resource configuration from a base station in a communication network;
a random access processing module selecting random access resources according to a transmission mode capability of the UE and transmitting a first message by using the selected random access resources; and
the transceiver transmitting a third message according to a random access response RAR, wherein the third message contains information of the transmission mode supported by the UE.

11. The UE of claim 10, wherein the transmission mode is one of a single tone or a multiple tone, or both the single tone and the multiple tone.

12. The UE of claim 10, wherein receiving the random access resource configuration from the base station by the UE further comprising: receiving the random access resource configuration by the UE through one of the following manners:
a system information block (SIB), a common downlink control channel, a specific downlink control channel, the random access response (RAR), in a random access procedure, a paging message, a medium access control (MAC) control element (CE), or a radio resource control (RRC) control element (CE).

13. The UE of claim 10, wherein the random access resource configuration comprises at least one of following: all random access resources are used for a single tone, a set of random access resources are used for the single tone and a set of random access resources are used for a multiple tone, or all random access resources are used for the multiple tone.

14. The UE of claim 13, wherein if the UE supports the multiple tone, and all random access resources are used for the multiple tone, or a set of random access resources are used for the single tone and a set of random access resources are used for the multiple tone, the random access processing module selects resources for random access from the random access resources for the multiple tone; and
if the UE supports the single tone, and all random access resources are used for the single tone, or a set of random access resources are used for the single tone and a set of random access resources are used for the multiple tone, the random access processing module selects resources for random access from the random access resources for the single tone.

15. The UE of claim 10, wherein the RAR contains at least one of following parameters: a power control command, a timing advance (TA) command, the transmission mode, a subcarrier spacing, a cyclic prefix (CP), and a frame structure.

16. The UE of claim 10, wherein the method further comprising: obtaining transmission format information from a physical downlink control channel (PDCCH) by the UE.

17. The UE of claim 16, wherein the UE further comprises a decoder, for decoding resources transmitted on a physical uplink shared channel (PUSCH) according to the transmission format information obtained from the PDCCH, wherein, when subcarrier spacing included in the RAR is 3.75 kHz or 15 kHz.

18. The UE of claim 17, wherein the decoded resources transmitted on the PUSCH comprises subcarrier indexes and a number of starting subcarrier.
